# EUROPÄISCHE PATENTSCHRIFT

(11) **EP 3 108 235 B1**
(45) Veröffentlichungstag und Bekanntmachung des Hinweises auf die Patenterteilung: **31.01.2018**
(21) Anmeldenummer: 14838776.4
(22) Anmeldetag: 22.12.2014
(51) Int. Cl.: G01N 29/22, G01N 29/265

(54) **VORRICHTUNG ZUR ULTRASCHALLPRÜFUNG**
ULTRASONIC TESTING DEVICE
DISPOSITIF DE CONTRÔLE PAR ULTRASONS

(30) Priorität: 23.12.2013 AT 508562013
(43) Veröffentlichungstag der Anmeldung: 28.12.2016
(73) Patentinhaber: Fill Gesellschaft m.b.H., 4942 Gurten (AT)
(72) Erfinder: GRABNER, Johann, A-4973 St. Martin im Innkreis (AT)
(74) Vertreter: Burger, Hannes
(86) Internationale Anmeldenummer: PCT/AT2014/050311
(87) Internationale Veröffentlichungsnummer: WO 2015/095908

(56) Entgegenhaltungen:
- EP-A1- 1 637 292
- DE-A1- 2 945 586
- FR-A1- 2 373 059
- JP-A- H1 114 610

## Beschreibung

Die Erfindung betrifft eine Vorrichtung zur Ultraschallprüfung mit einer Prüfkopfanordnung mit einer Schallkopplungsfläche, wobei die Prüfkopfanordnung in einer parallel zu einer Oberfläche eines zu prüfenden Gegenstandes verlaufenden Prüfrichtung bewegbar ist und entlang einer zu der Prüfrichtung und der Oberfläche des zu prüfenden Gegenstandes verlaufenden, ersten Raumachse verschiebbar angeordnet ist.

Darüber hinaus betrifft die Erfindung ein Verfahren zum Steuern einer kardanisch aufgehängten Prüfkopfanordnung zur Ultraschallmessung, wobei die Prüfkopfanordnung in eine parallel zu einer Oberfläche eines zu prüfenden Gegenstandes verlaufende Prüfrichtung bewegt wird und entlang einer zu der Prüfrichtung und der Oberfläche des zu prüfenden Gegenstandes verlaufenden, ersten Raumachse verschiebbar angeordnet ist.

Eine Vorrichtung der oben genannten Art ist aus der FR7735094A1 bekannt geworden. Darüber hinaus sind aus der EP1637292A1, der DE2945586A1 und der JPH1114610 A weitere Prüfkopfanordnungen bekannt geworden.

Eine Vorrichtung der eingangs genannten Art ist beispielsweise auch aus der WO2010060758A1 bekannt geworden. Bei der bekannten Ausfiihrungsform wird eine Prüfkopfanordnung gegen einen Gegenhalter gepresst, sodass ein zu prüfender Abschnitt eines Gegenstandes zwischen der Prüfkopfanordnung und dem Gegenhalter zangenförmig umfasst wird. Nachteilig an der bekannten Ausfuhrungsform ist vor allem, dass sich damit bauartbedingt nur von einem Gegenstand abstehende Abschnitte bzw. Kanten überprüfen lassen.

Ein weiterer Nachteil bekannter Vorrichtung zur Ultraschallprüfung, bei welchen eine Untersuchung mittels lokaler Tauchtechnik erfolgt, besteht darin, dass ein Abstand zwischen der Schallkopplungsfläche und der Oberfläche des zu prüfenden Gegenstandes variieren kann, wenn die Oberfläche Krümmungen, beispielsweise konkaver oder konvexer Natur aufweist. Eine Veränderung des Abstandes zwischen der Oberfläche des zu prüfenden Gegenstandes und der Schallkopplungsfläche kann jedoch Messefehler zur Folge haben und eine Untersuchung der betreffenden Stelle sehr erschweren.

Es ist daher eine Aufgabe der Erfindung, die oben genannten Nachteile des Stands der Technik zu überwinden.

Diese Aufgabe wird mit einer Vorrichtung gemäß Anspruch 1 gelöst. Durch die bewegliche Anordnung der Prüfkopfanordnung kann eine Anpassung der Orientierung der Prüfkopfanordnung an unterschiedliche Oberflächenkonturen erfolgen, während durch die in Bezug auf die Schallkopplungsfläche ortsfesten Laufrollen ein konstanter Abstand zwischen der Schallkopplungsfläche und der zu prüfenden Oberfläche gegeben ist. Unter dem Begriff Schallkopplungsfläche wird in dem folgendem Zusammenhang jene Oberfläche der Prüfkopfanordnung verstanden, welche eine physikalische Grenze zwischen der Prüfkopfanordnung und einem zwischen der zu prüfenden Oberfläche und der Prüfkopfanordnung befindlichen flüssigen Medium, beispielsweise Wasser, zur Schallkopplung darstellt. Der messtechnisch erfasste Ultraschallein- und Austritt in bzw. aus der Prüfkopfanordnung erfolgt ebenfalls über die Schallkopplungsfläche.

Bevorzugt wird die Prüfkopfanordnung mit einer einstellbaren Kraft gegen die Oberfläche des zu prüfenden Gegenstandes gepresst.

Um die Kippstabilität der Schallkopplungsfläche auf einfache Weise zu erhöhen und um einen konstanten Abstand bei gekrümmten Oberflächen des zu prüfenden Gegenstandes besser gewährleisten zu können, ist in Prüfrichtung betrachtet vor den beiden Laufrollen mit den in Bezug auf die Schallkopplungsfläche ortsfesten Drehachsen zumindest eine vordere Laufrolle angeordnet, wobei die Drehachse der zumindest einen vorderen Laufrolle in Bezug auf die Schallkopplungsfläche abstandsveränderlich ist.

Die Kippstabilität und die Einhaltung eines konstanten Abstands der Schallkopplungsfläche zu der Oberfläche des zu prüfenden Gegenstandes lassen sich dadurch weiter verbessern, dass in Prüfrichtung betrachtet hinter den beiden Laufrollen mit den in Bezug auf die Schallkopplungsfläche ortsfesten Drehachsen zumindest eine hintere Laufrolle angeordnet ist, wobei die Drehachse der zumindest einen hinteren Laufrolle in Bezug auf die Schallkopplungsfläche abstandsveränderlich ist.

Gemäß einer vorteilhaften Weiterbildung kann es vorgesehen sein, dass auf einander gegenüberliegenden Seiten der Schallkopplungsfläche vor und hinter jeder Laufrolle mit in Bezug auf die Schallkopplungsfläche ortsfester Drehachse je zumindest eine vordere und hintere Laufrolle mit in Bezug auf die Schallkopplungsfläche abstandsveränderlicher Drehachse angeordnet ist.

Die Einhaltung eines konstanten Abstandes der Schallkopplungsfläche gegenüber einer zu prüfenden Oberfläche, die auch Unebenheiten aufweisen kann, lässt sich dadurch gewährleisten, dass die vordere und hintere Laufrolle jeder Seite mit auf je einer um eine zur dritten Raumrichtung parallelen Drehachse drehbar an der Prüfkopfanordnung gelagerten Schwinge gelagert ist, wobei die Schwingen der vorderen und der hinteren Laufrolle an den jeweils zugehörigen Laufrollen abgewandten Enden miteinander gekoppelt sind, wobei durch die Kopplung eine gleichsinnige Bewegung der vorderen und der hinteren Laufrolle gegeben ist.

Ein optimales Anliegen der Laufflächen der vorderen und hinteren Laufrollen an der Oberfläche des zu prüfenden Gegenstandes lässt sich dadurch erzielen. Dass die Schwingen mit zumindest einer Feder mit dem Rahmen der Prüfkopfanordnung verbunden sind, welche eine von der Schallkopplungsfläche wegweisende und in Richtung der Laufrollen wirkende Kraft erzeugt.

Um ein Aufsitzen der Schallkopplungsfläche bei überfahren einer Kante zu verhindern, kann es vorgesehen sein, dass der Abstand zwischen einer Lauffläche der an der Schwinge gelagerten Laufrolle und der der Lauffläche nächstliegenden Kante der Schwinge maximal 10% des Durchmessers der Laufrolle beträgt und/oder geringer ist als der Überstand der Laufrollen mit den ortsfesten Drehachsen.

Auch wenn zur Einhaltung eines konstanten Abstandes zwischen der Oberfläche des zu prüfenden Gegenstandes und der Schallkoppelfläche über die gesamte Fläche der Schallkopplungsfläche die Anordnung von vorderen und hinteren Laufrollen zu den mittleren Laufrollen mit in Bezug auf die Schallkopplungsfläche ortsfesten Drehachsen sehr vorteilhaft ist, so kann anstelle der vorderen und hinteren Laufrollen auch je ein Aktor verwendet werden, der beispielsweise in Kombination mit einem Abstandssensor die Schallkoppelfläche um eine zu den Drehachsen oder im Fall einer gemeinsamen Drehachse der Laufrollen parallele Achse verschwenkt, um die Schallkoppelfläche stets parallel zu der Oberfläche des zu prüfenden Gegenstandes auszurichten.

Gemäß einer bevorzugten Ausführungsform der Erfindung kann es vorgesehen sein, dass die Prüfkopfanordnung einen Rahmen umfasst, an welchem die Laufrollen gelagert sind und der in einer um die zweite Raumachse oder um die dritte Raumachse schwenkbaren Halterung gelagert ist, wobei der Rahmen um die dritte Raumachse schwenkbar an der Halterung gelagert ist, wenn die Halterung um die zweite Raumachse schwenkbar ist, wobei der Rahmen um die zweite Raumachse schwenkbar ist, wenn die Halterung um die dritte Raumachse schwenkbar ist, wobei ein Winkel zwischen den Drehachsen der Laufrollen und der Schallkopplungsfläche invariant gegenüber einer Drehung des Rahmens ist.

Eine vorteilhafte Weiterbildung der Erfindung besteht darin, dass die Halterung mittels zumindest einer ersten Kulisse geführt ist, wobei eine Längsmittelkurve der zumindest einen ersten Kulisse die Form eines Kreisbogens aufweist. Weiters kann es vorgesehen sein, dass der Rahmen an der Halterung mittels zumindest einer zweiten Kulisse geführt ist, wobei eine Längsmittelkurve der zumindest einen zweiten Kulisse die Form eines Kreisbogens aufweist. Besonders bevorzugt schneiden sich die zweite und dritte Raumachse in einem Punkt, der von der Schallkopplungsfläche den gleichen Abstand aufweist wie der Überstand der ortsfesten Laufrolle zur Schallkopplungsfläche. Durch die soeben genannte Ausführungsform lässt sich eine kardanische Lagerung der Prüfkopfanordnung realisieren, sodass Schallkopplungsfläche sich stets parallel zu der Oberfläche des zu prüfenden Gegenstandes einstellt bzw. einstellen lässt.

Vorteilhafterweise kann es vorgesehen sein, dass eine durch die Kulisse definierte Drehachse des Rahmens durch Auflagepunkte der Laufrollen mit den in Bezug auf die Schallkoppelfläche ortsfesten Drehachsen verläuft und die erste Raumachse bevorzugt in einem Tool Center Point schneidet. Diese Ausführungsform ist besonders gut geeignet für eine Variante, in welcher die Prüfkopfanordnung den Endeffektor eines Roboters darstellt.

Um Unebenheiten der Oberfläche des zu prüfenden Gegenstandes optimal ausgleichen zu können, kann die Halterung in Richtung der ersten Raumrichtung federnd gelagert sein.

Bei der erfindungsgemäßen Prüfkopfanordnung handelt es sich besonders bevorzugt um eine Anordnung zur Ultraschallprüfung mittels lokaler Tauchtechnik. Bei dieser Technik wird in einen Spalt zwischen der Schallkopplungsfläche und der Oberfläche des zu prüfenden Gegenstandes zur Schallkopplung eine Flüssigkeit, insbesondere Wasser, aufgebracht. Insbesondere kann die Prüfkopfanordnung mehrere Ultraschallmessköpfe aufweisen. So kann die Prüfkopfanordnung beispielsweise als Phased Array Gruppenstrahler ausgebildet sein.

Als besonders vorteilhaft hat es sich herausgestellt, dass die Schallkopplungsfläche durch eine Oberfläche einer plattenförmigen Abdeckung der Prüfkopfanordnung gebildet ist. Die Schallkopplungsfläche kann beispielsweise durch eine Glas oder Kunststoffplatte, insbesondere durch eine Plexiglasplatte, gebildet sein. Besonders bevorzugt kann die Schallkopplungsfläche eine hydrophile Oberfläche aufweisen. Durch diese Ausführungsform können eine optimale Benetzung der Schallkopplungsfläche mit Flüssigkeit gewährleistet werden. Unter hydrophil wird in dem vorliegenden Zusammenhang verstanden, dass ein Kontaktwinkel gegenüber Wasser nahe bei 0° liegt. Zur Realisierung der hydrophilen Oberfläche kann neben der Verwendung eines hydrophilen Grundmaterials, wie beispielsweise Glas oder Kunststoff, die Oberfläche auch mit einer hydrophilen Beschichtung versehen sein. Auch kann in die Oberfläche eine geeignete Struktur eingebracht werden, welche infolge durch Kapillarwirkung dafür sorgt, dass die Oberfläche stets mit einem Wasserfilm benetzt ist. Darüber hinaus ist es auf diese Weise möglich, die Bildung von Luftblasen in einem zwischen der Schallkopplungsfläche und der Oberfläche des zu untersuchenden Gegenstandes gebildeten Spalt besser zu unterbinden, als dies bei bekannten Lösungen der Fall ist. Um eine gute Schallkopplung zu gewährleisten kann die Abdeckung, deren Oberfläche die Schallkoppelfläche bildet, aus einem Material gebildet sein, beispielsweise Plexiglas, dessen akustische Impedanz innerhalb einer Toleranz von +/- 20% jener von Wasser entspricht. Besonders bevorzugt entspricht die akustische Impedanz der Abdeckung jener von Wasser.

Weiters kann die Prüfkopfanordnung zumindest ein spannbares Zugmittel aufweisen, wobei die Schallkoppelfläche der Prüfkopfanordnung durch Spannen des zumindest einen Zugmittels in eine horizontal ausgerichtete Position gebracht ist, in welcher die Schallkoppelfläche parallel zu einer horizontal verlaufenden Ebene angeordnet ist.

Es hat sich als vorteilhaft herausgestellt, wenn die Vorrichtung zumindest einen Wegmessgeber zur Erfassung einer Verschiebung der Prüfkopfanordnung in der ersten Raumrichtung aufweist insbesondere in Zusammenhang mit dem Verfahren gemäß Anspruch 19. Durch das erfindungsgemäße Verfahren lässt sich die Nachführung der Prüfkopfanordnung in Bezug auf das zu prüfende Teil in der Programmierung wesentlich vereinfachen. So muss bei vorliegender Vorrichtung und Verfahren die Bahn zur Führung der Prüfkopfanordnung nur in einer Ebene programmiert werden, die Nachführung in der ersten auf diese Ebene senkrechten Richtung erfolgt beispielsweise über einen Roboter, die Orientierung der Schalleinkoppelfläche gegenüber der Oberfläche des zu prüfenden Gegenstandes wird durch die erfindungsgemäße kardanische Lagerung und den Laufrollen gewährleistet.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer erfindungsgemäßen Vorrichtung;
- Fig. 2: eine perspektivische Unteransicht der Vorrichtung aus Fig. 1;
- Fig. 3: einen Schnitt durch einen Rahmen und eine Halterung der Prüfkopfanordnung aus Fig. 1;
- Fig. 4: eine Seitensicht des Rahmens und einen Schnitt der Halterung aus Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der erfindungsgemäßen Vorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

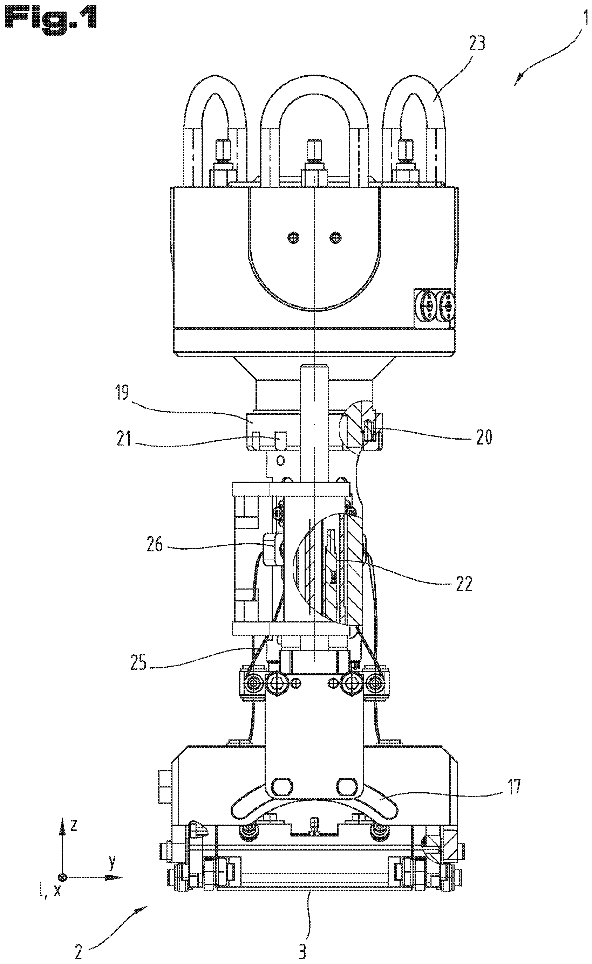

Gemäß Fig. 1 weist eine Vorrichtung 1 zur Ultraschallprüfung eine Prüfkopfanordnung 2 auf. Die Prüfkopfanordnung 2 ist in dem dargestellten Ausführungsbeispiel eine Phased Array Anordnung mit mehreren Ultraschallmessköpfen, welche mittels lokaler Tauchtechnik arbeitet. Die Prüfkopfanordnung 2 weist eine Schallkopplungsfläche 3 auf. Die Schallkopplungsfläche 3 kann durch eine Oberfläche einer plattenförmigen Abdeckung der Prüfkopfanordnung 2 gebildet sein.

Weiters kann die Prüfkopfanordnung 2 entlang einer parallel zu einer Oberfläche eines zu prüfenden Gegenstandes verlaufenden Prüfrichtung I sowie entlang einer ersten Raumachse z verschoben werden. Darüber hinaus kann die Prüfkopfanordnung um eine parallel zu der Prüfrichtung I verlaufende zweite Raumachse x und um eine normal zu der ersten Raumachse z und zweiten Raumachse x verlaufende dritte Raumachse y verschwenkt werden.

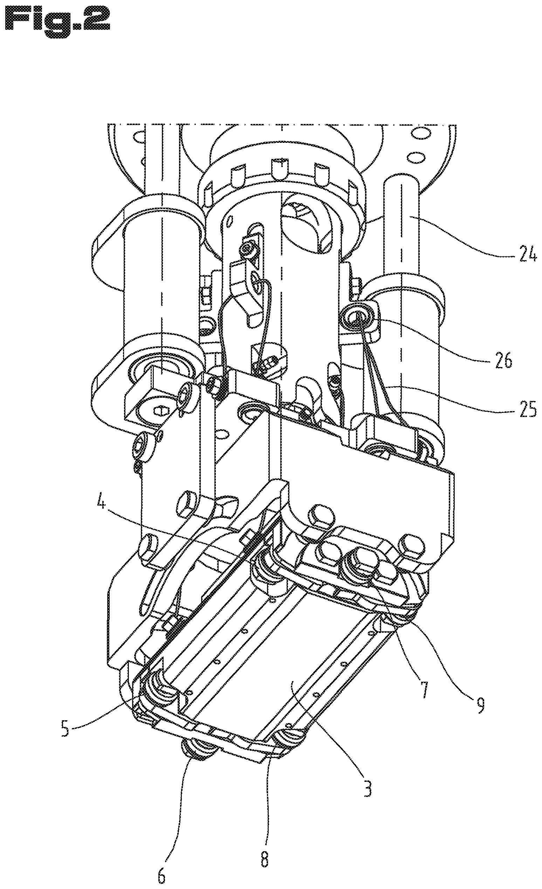

Gemäß Figur 2 weist die Prüfkopfanordnung 2 außerhalb der Schallkopplungsfläche 3 angeordnete Laufrollen 4, 5, 6, 7, 8, 9 mit zueinander parallelen und zur Prüfrichtung I normal verlaufenden Drehachsen auf. Laufflächen der Laufrollen 4, 5, 6, 7, 8, 9 überragen die Schallkopplungsfläche 3 in einer von der Prüfkopfanordnung 2 wegweisenden Richtung. Auf diese Weise entsteht ein Spalt zwischen der Schallkopplungsfläche 3 und der Oberfläche des zu prüfenden Gegenstandes, der mit einer Flüssigkeit, beispielsweise Wasser gefüllt bzw. durchspült wird, um eine akustische Kopplung zwischen der Prüfkopfanordnung 2 und dem zu prüfenden Gegenstand herzustellen. An der Unterseite der Prüfkopfanordnung 2 können Flüssigkeitsaustrittsöffnungen und/oder Düsen angeordnet sein, durch welche Flüssigkeit, bevorzugt Wasser, in den Spalt zwischen Schallkopplungsfläche 3 und Oberfläche des zu prüfenden Gegenstandes eingespritzt wird. Die der Oberfläche des zu prüfenden Gegenstandes zugewandte Oberfläche der Schallkopplungsfläche 3 kann mit einer hydrophilen Beschichtung versehen oder hydrophil ausgebildet sein. Dadurch kann bewirkt werden, dass der Spalt stets ausreichend mit Flüssigkeit gefüllt und eine optimale Schallkopplung zwischen der Prüfkopfanordnung und dem zu prüfenden Gegenstand gegeben ist. Auch hat es sich als sehr vorteilhaft herausgestellt, dass die akustische Impedanz des Materials, aus welchem die Schallkopplungsfläche 2 besteht, jener von Wasser entspricht, um eine gute Schallübertragung zu gewährleisten.

Zwei der Laufrollen 6, 7, die an einander gegenüberliegenden Seiten der Schallkopplungsfläche 3 angeordnet sind, sind um Drehachsen drehbar, die ortsfest in Bezug auf die Schallkopplungsfläche 3 angeordnet sind. Die Drehachsen der beiden Laufrollen 6, 7 können hierbei auch zu einer Drehachse zusammenfallen. Bevorzugt liegt eine Normalprojektion der ortsfesten Drehachsen in eine zur ersten Raumrichtung normal verlaufende Ebene und eine Projektion eines Schwerpunktes der Prüfkopfanordnung 2 in diese Ebene auf einer Geraden.

Weiters kann es vorgesehen sein, dass in Prüfrichtung I betrachtet vor den beiden Laufrollen 6, 7 mit den in Bezug auf die Schallkopplungsfläche 3 ortsfesten Drehachsen vordere Laufrollen 4, 5 angeordnet sind. Die Drehachse der vorderen Laufrollen 4, 5 sind in Bezug auf die Schallkopplungsfläche 3 abstandsveränderlich. So können sich die beiden Laufrollen 4, 5 gegenüber der Schallkoppelfläche 3 in z Richtung bewegen.

Auch können in Prüfrichtung I betrachtet hinter den beiden Laufrollen 6, 7 hintere Laufrollen 8, 9 angeordnet sein, deren Drehachsen gegenüber der Schallkopplungsfläche 3 ebenfalls abstandsveränderlich sind und gegenüber der Schallkoppelfläche 3 in z Richtung bewegt werden können. Die Drehachsen der Laufrollen 4 und 5 bzw. der Laufrollen 8 und 9 können ebenfalls jeweils zu einer Drehachse zusammengefasst werden. So können diese Drehachsen beispielsweise mittels einer Starrachse realisiert sein. Alternativ zu einer Starrachse können die Laufrollen 4, 5, 8. 9 aber auch als Losräder realisiert sein.

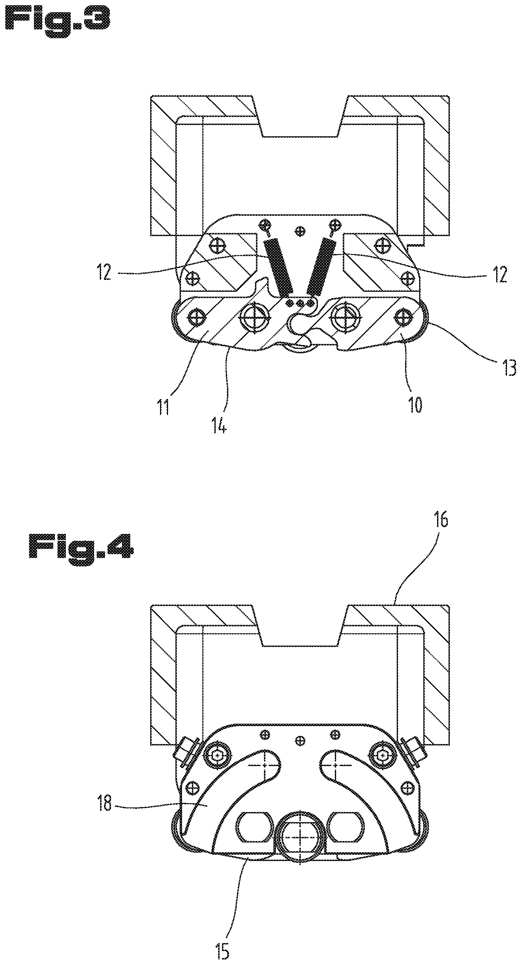

Wie es aus Figur 3 ersichtlich ist, können die vordere Laufrolle 4, 5 und hintere Laufrolle 9, 6 jeder Seite mit auf je einer um eine zur dritten Raumrichtung y parallele Drehachse drehbar an der Prüfkopfanordnung 2 gelagerten Schwinge 10, 11 gelagert sein. Die Schwingen 10, 11 sind an den jeweils zugehörigen Laufrollen abgewandten Enden miteinander gekoppelt sind, wobei durch die Kopplung eine gleichsinnige Bewegung der vorderen Laufrolle 4 und der hinteren Laufrolle 9 gegeben ist. In der dargestellten Ausführungsform ist ein Ende der Schwinge 11 als Gabel und ein Ende der Schwinge 10 als ein in die Gabel eingreifender Kopf ausgeführt. Um eine Kopplung der beiden Schwingen 10, 11 zu bewirken können die Gabel und der Kopf entsprechende, ineinander eingreifend Stirnverzahnungen aufweisen. Anstelle der Stirnverzahnungen wäre jedoch beispielsweise ein Reibschluss zwischen den beiden Enden der Schwingen 10 und 11 möglich.

Die beiden Schwingen 10 und 11 können mit einer Federkraft belastet werden, welche in dem dargestellten Ausführungsbeispiel von zwei Federn 12 hervorgerufen wird. Durch die Federn 12 werden in dem dargestellten Ausführungsbeispiel die miteinander gekoppelten Enden der Schwingen 10 und 11 von der Oberfläche des zu prüfenden Gegenstandes weggezogen und die Laufrollen 4 und 9 gegen diese Oberfläche gepresst. Natürlich sind auch neben der dargestellten Ausführungsform auch andere Anordnungen und Federn möglich, mit welchen der oben genannte Effekt des Anpressens der Laufrollen an die Oberfläche des zu prüfenden Gegenstandes erzielt wird.

Wie aus Fig. 3 weiter ersichtlich ist, sind die Durchmesser der Schwingen 10, 11 in z Richtung betrachtet relativ dick. Dadurch lässt sich ein Aufsitzen der Prüfkopfanordnung 2 bei relativ scharfkantigen Höhenübergängen auf der Oberfläche des zu prüfenden Gegenstandes vermeiden. So beträgt der Abstand zwischen einer Lauffläche 13 einer an der Schwinge 10, 11 gelagerten Laufrolle und der der Lauffläche 13 nächstliegenden Kante 14 der betreffenden Schwinge 10, 11 bevorzugt maximal 10% des Durchmessers der Laufrolle 4, 9.

Gemäß Figur 4 kann die Prüfkopfanordnung 2 einen Rahmen 15 umfassen, an welchem die Laufrollen 4, 5, 6, 7, 8, 9 gelagert sind. Der Rahmen 15 wiederum kann in einer um die Raumachse x oder Raumachse y schwenkbaren Halterung 16 gelagert sein. Falls der Rahmen 15 um die Raumachse y schwenkbar an der Halterung 16 gelagert ist, ist die Halterung 16 um die Raumachse x schwenkbar. Falls hingegen der Rahmen 15 um die Raumachse x schwenkbar ist, ist die Halterung 16 um die Raumachse y verschwenkbar. Ein Winkel zwischen den Drehachsen der Laufrollen 4, 5, 6, 7, 8, 9 und der Schallkopplungsfläche 3 ist jedoch invariant gegenüber einer Drehung des Rahmens 15. Es kann aber auch vorgesehen sein, dass die Laufrollen 4, 5, 6, 7, 8, 9 jeweils um die Raumachse z verschwenkbar gelagert sind. In diesem Fall sind die zur Schalleinkoppelfläche 3 parallelen Drehachsen der Laufrollen 4, 5, 6, 7, 8, 9 bevorzugt gegenüber der jeweiligen Schwenkachse in z-Richtung versetzt, sodass die Drehachsen der Schwenkachse einer Bewegung der Prüfkopfanordnung 2 in Bewegungsrichtung nachlaufen.

Die Halterung 16 kann zur Realisierung der Schwenkbewegung um die x bzw. y Achse in einer ersten Kulisse 17 geführt sein, wobei eine Längsmittelkurve der Kulisse 17 die Form eines Kreisbogens aufweist.

Wie aus Figur 4 weiters ersichtlich ist, kann der Rahmen 15 an der Halterung 16 mittels einer zweiten Kulisse 18 geführt sein, wobei eine Längsmittelkurve der zweiten Kulisse 18 ebenfalls die Form eines Kreisbogens aufweist. Die Halterung 16 weist in dem dargestellten Ausführungsbeispiel sowohl an ihrem in Prüfrichtung I vorderen und hinteren Ende je eine Kulisse 17 sowie an den beiden in Raumrichtung y liegenden Endbereichen je eine Kulisse 18 auf.

Eine durch die Kulisse 18 definierte Drehachse des Rahmens 15 die durch die Auflagepunkte der Laufrollen 6, 7 verläuft. D.h. der Rahmen 15 vollführt bei Bewegung in der Kulisse 18 eine Drehung um eine Drehachse, die durch die Berührungspunkte der Laufrollen 6, 7, mit der Oberfläche des zu prüfenden Gegenstandes liegen. Bevorzugterweise schneidet die durch die Kulisse 18 definierte Drehachse die erste Raumachse z in einem Tool Center Point.

Durch eine Anordnung des Schwerpunktes der Prüfkopfanordnung 2 unter den Auflagepunkten der Kulissensteine in der Kulisse 18 und der Kulisse 17 der Halterung 16 lässt sich auf einfache Wiese eine horizontale Selbstausrichtung der Schallkoppelfläche 3 realisieren.

Die Kulisse 18 kann durchgehend oder unterbrochen sein. Durch eine Unterbrechung der Kulisse 18, wie es dargestellt ist, kann ein Endanschlag für darin geführte Kulissensteine aufweisen. Auf diese Weise lässt sich die Bewegung des Rahmens 15 auf einfache Weise begrenzen.

In z-Richtung kann die Halterung 16 federnd gelagert sein. So kann die Halterung 16 beispielsweise über einen Luftfederzylinder in z-Richtung gefedert sein. Die Halterung 16 kann weiters über ein Gestell mit einer Schnittstelle zur Anbindung an einen Roboterarm, beispielsweise einem Flansch, verbunden sein. An der Oberseite des Flansches können O-Ringe 23 angeordnet sein, welche in einem montierten Zustand zwischen dem Flansch und einer Schnittstelle des Roboterarms zu liegen kommen und eine nachgiebige Anbindung gewährleisten die Beschädigungen verhindert wenn es zu einer Kollision der Prüfanordnung mit dem zu prüfenden Bauteil kommt.

Die Prüfkopfanordnung 2 kann mittels eines Schnellverschlusses auf einfache Weise ein- und ausgebaut werden. Der Schnellverschluss kann eine Überwurfmutter 19 aufweisen, in welcher sich Ausnehmungen 21 befinden, die mit Führungsbolzen 20 zusammenwirken. In z-Richtung kann die Prüfkopfanordnung 2 entlang von Führungen 24 verschoben werden. Die Führungen 24 verhindern eine Drehung der Prüfkopfanordnung 2 um die z Richtung um die Orientierung der Prüfkopfanordnung 2 durch den beispielsweise Roboterarm vorzugeben.

Weiters kann die Prüfkopfanordnung 2 mit einem Zugmittel 25 verbunden sein. Als Zugmittel 25 kann beispielsweise ein Seil oder ein Band verwendet werden. Das Zugmittel 25 ist in Ösen 26 geführt und an allen vier Ecken mit dem Rahmen 15 der Prüfkopfanordnung 2 verbunden. Durch ein Betätigen bzw. Ausfahren eines zentralen Arbeitszylinders, der auch als Feder in z-Richtung verwendet werden kann, lässt sich das Zugmittel 25 durch Verschieben der Ösen 26 in z- Richtung spannen. Durch das Spannen der Zugmittel 25 kommt es zu einer Ausrichtung der Schallkoppelfläche 3, sodass diese parallel zu der Horizontalebene verläuft.

Zur Erfassung einer Bewegung in der Raumrichtung z ist ein Wegmessgeber 22 angeordnet. Ein von dem Wegmessgeber 22 erzeugtes Signal kann zur Steuerung eines Roboterarms, an welchem die Prüfkopfanordnung aufgehängt ist, verwendet werden. Bei kardanischer Aufhängung der Prüfkopfanordnung 2 können die Drehachsen der kardanischen Aufhängung so angeordnet sein, dass sie in dem Tool Center Point einer Roboteranordnung zur Bewegung der Prüfkopfanordnung 2 liegen. Falls die Prüfkopfanordnung 2 in der Raumrichtung z gegenüber der Roboteranordnung soweit verschoben wird, dass ein vorgegebener Schwellwert überschritten wird, kann die Roboteranordnung in z-Richtung gleichsinnig mit der Verschiebung der Prüfkopfanordnung 2 um eine Strecke, deren Betrag der Verschiebung der Prüfkopfanordnung 2 entspricht, nachfahren. Durch das erfindungsgemäße Verfahren lässt sich die Nachführung der Prüfkopfanordnung 2 in Bezug auf das zu prüfende Teil in der Programmierung wesentlich vereinfachen. So muss bei vorliegender Vorrichtung und Verfahren die Bahn zur Führung der Prüfkopfanordnung 2 nur in einer Ebene programmiert werden, die Nachführung in der ersten auf diese Ebene senkrechten z-Richtung erfolgt beispielsweise über einen Roboter, die Orientierung der Schalleinkoppelfläche 3 gegenüber der Oberfläche des zu prüfenden Gegenstandes wird durch die erfindungsgemäße kardanische Lagerung und den Laufrollen gewährleistet.

### Bezugszeichenaufstellung

- 1: Vorrichtung
- 2: Prüfkopfanordnung
- 3: Schallkopplungsfläche
- 4: Laufrolle
- 5: Laufrolle
- 6: Laufrolle
- 7: Laufrolle
- 8: Laufrolle
- 9: Laufrolle
- 10: Schwinge
- 11: Schwinge
- 12: Feder
- 13: Lauffläche
- 14: Kante
- 15: Rahmen
- 16: Halterung
- 17: Kulisse
- 18: Kulisse
- 19: Überwurfmutter
- 20: Führungsbolzen
- 21: Ausnehmung
- 22: Wegmessgeber
- 23: O-Ring
- 24: Führung
- 25: Zugmittel
- 26: Öse
- z: erste Raumrichtung
- x: zweite Raumrichtung
- y: dritte Raumrichtung
- I: Prüfrichtung

## Patentansprüche

1. Vorrichtung (1) zur Ultraschallprüfung mit einer Prüfkopfanordnung (2) mit einer Schallkopplungsfläche (3), wobei die Prüfkopfanordnung (2) in einer parallel zu einer Oberfläche eines zu prüfenden Gegenstandes verlaufenden Prüfrichtung (I) bewegbar ist und die Vorrichtung Mittel zum Verschieben entlang einer zu der Prüfrichtung (I) und der Oberfläche des zu prüfenden Gegenstandes verlaufenden ersten Raumachse (z) aufweist, wobei die Vorrichtung Mittel zum Verschwenken der Prüfkopfanordnung (2) um eine parallel zu der Prüfrichtung (I) verlaufende zweite Raumachse (x) und um eine normal zu der ersten Raumachse (z) und zweiten Raumachse (x) verlaufende dritte Raumachse (y) aufweist, **dadurch gekennzeichnet, dass** die Prüfkopfanordnung (2) außerhalb der Schallkopplungsfläche (3) angeordnete Laufrollen (4, 5, 6, 7, 8, 9) mit zueinander parallel und zur Prüfrichtung normal verlaufenden Drehachsen aufweist, und Laufflächen (13) der Laufrollen (4, 5, 6, 7, 8, 9) die Schallkopplungsfläche (3) in einer von der Prüfkopfanordnung (2) wegweisenden Richtung überragen, wobei zumindest zwei Laufrollen (6, 7) an einander gegenüberliegenden Seiten der Schallkopplungsfläche (3) angeordnet sind, deren jeweilige Drehachsen ortsfest in Bezug auf die Schallkopplungsfläche (3) angeordnet sind, wobei in Prüfrichtung (I) betrachtet vor den beiden Laufrollen (6, 7) mit den in Bezug auf die Schallkopplungsfläche (3) ortsfesten Drehachsen zumindest eine vordere Laufrolle (4, 5) angeordnet ist, wobei die Drehachse der zumindest einen vorderen Laufrolle (4, 5) in Bezug auf die Schallkopplungsfläche (3) abstandsveränderlich ist.

2. Vorrichtung nach Anspruch 1, **dadurch gekennzeichnet, dass** in Prüfrichtung (I) betrachtet hinter den beiden Laufrollen (6, 7) mit den in Bezug auf die Schallkopplungsfläche (3) ortsfesten Drehachsen zumindest eine hintere Laufrolle (8, 9) angeordnet ist, wobei die Drehachse der zumindest einen hinteren Laufrolle in Bezug auf die Schallkopplungsfläche (3) abstandsveränderlich ist.

3. Vorrichtung nach Anspruch 1 oder 2, **dadurch gekennzeichnet, dass** auf einander gegenüberliegenden Seiten der Schallkopplungsfläche (3) vor und hinter jeder Laufrolle (6, 7) mit in Bezug auf die Schallkopplungsfläche (3) ortsfester Drehachse je zumindest eine vordere Laufrolle (4, 5) und hintere Laufrolle (8, 9) mit in Bezug auf die Schallkopplungsfläche (3) abstandsveränderlicher Drehachse angeordnet ist.

4. Vorrichtung nach Anspruch 3, **dadurch gekennzeichnet, dass** die vordere und hintere Laufrolle jeder Seite mit auf je einer um eine zur dritten Raumrichtung (y) parallele Drehachse drehbar an der Prüfkopfanordnung (2) gelagerten Schwinge (10, 11) gelagert ist, wobei die Schwingen (10, 11) der vorderen Laufrolle (4, 5) und der hinteren Laufrolle (8, 9) an den jeweils zugehörigen Laufrollen (4, 5, 8, 9) abgewandten Enden miteinander gekoppelt sind, wobei durch die Kopplung eine gleichsinnige Bewegung der vorderen Laufrolle (4, 5) und der hinteren Laufrolle (8, 9) gegeben ist.

5. Vorrichtung nach Anspruch 4, **dadurch gekennzeichnet, dass** die Schwingen (10, 11) mit zumindest einer Feder (12) verbunden sind, welche eine von der Schallkopplungsfläche (3) wegweisende und in Richtung der Laufrollen (4, 5, 8, 9) wirkende Kraft erzeugt.

6. Vorrichtung nach Anspruch 4 oder 5, **dadurch gekennzeichnet, dass** der Abstand zwischen einer Lauffläche (13) der an der Schwinge (10, 11) gelagerten Laufrolle (5, 6, 8, 9) und der der Lauffläche (13) nächstliegenden Kante (14) der Schwinge (10, 11) maximal 10% des Durchmessers der Laufrolle (4, 5, 8, 9) beträgt und/oder geringer ist als der Überstand der Laufrollen (6, 7) mit den ortsfesten Drehachsen zur Schallkoppelfläche (3).

7. Vorrichtung nach einem der Ansprüche 1 bis 6, **dadurch gekennzeichnet, dass** die Prüfkopfanordnung (2) einen Rahmen (15) umfasst, an welchem die Laufrollen (4, 5, 6, 7, 8, 9) gelagert sind und der in einer um die zweite Raumachse (x) oder um die dritte Raumachse (y) schwenkbaren Halterung (16) gelagert ist, wobei der Rahmen (15) um die dritte Raumachse (y) schwenkbar an der Halterung (16) gelagert ist, wenn die Halterung (16) um die zweite Raumachse (x) schwenkbar ist, wobei der Rahmen (15) um die zweite Raumachse (x) schwenkbar ist, wenn die Halterung (16) um die dritte Raumachse (y) schwenkbar ist, wobei ein Winkel zwischen den Drehachsen der Laufrollen (4, 5, 6, 7, 8, 9) und der Schallkopplungsfläche (3) invariant gegenüber einer Drehung des Rahmens (15) ist.

8. Vorrichtung nach Anspruch 7, **dadurch gekennzeichnet, dass** die Halterung (16) mittels zumindest einer ersten Kulisse (17) geführt ist, wobei eine Längsmittelkurve der zumindest einen ersten Kulisse (17) die Form eines Kreisbogens aufweist.

9. Vorrichtung nach Anspruch 8, **dadurch gekennzeichnet, dass** der Rahmen (15) an der Halterung (16) mittels zumindest einer zweiten Kulisse (18) geführt ist, wobei eine Längsmittelkurve der zumindest einen zweiten Kulisse (18) die Form eines Kreisbogens aufweist.

10. Vorrichtung nach Anspruch 9, **dadurch gekennzeichnet, dass** eine durch die Kulisse (18) definierte Drehachse des Rahmens (15) durch Auflagepunkte der Laufrollen (6, 7) mit den in Bezug auf die Schallkoppelfläche (3) ortsfesten Drehachsen verläuft und die erste Raumachse (z) bevorzugt in einem Tool Center Point schneidet.

11. Vorrichtung nach einem der Ansprüche 8 bis 10, **dadurch gekennzeichnet, dass** die Halterung (16) in Richtung der ersten Raumrichtung (z) federnd gelagert ist.

12. Vorrichtung nach einem der Ansprüche 1 bis 11, **dadurch gekennzeichnet, dass** die Prüfkopfanordnung (2) kardanisch gelagert ist.

13. Vorrichtung nach einem der Ansprüche 1 bis 12, **dadurch gekennzeichnet, dass** die Prüfkopfanordnung (2) zumindest ein spannbares Zugmittel (25) aufweist, wobei die Schallkoppelfläche (3) der Prüfkopfanordnung (2) durch Spannen des zumindest einen Zugmittels (25) in eine senkrecht zur ersten Raumrichtung (z) ausgerichtete Position gebracht wird.

14. Vorrichtung nach einem der Ansprüche 1 bis 13, **dadurch gekennzeichnet, dass** sie zumindest einen Wegmessgeber (22) zur Erfassung einer Verschiebung der Prüfkopfanordnung (2) in der ersten Raumrichtung (z) aufweist.

15. Vorrichtung nach einem der Ansprüche 1 bis 14, **dadurch gekennzeichnet, dass** die Schallkopplungsfläche (3) eine hydrophile Oberfläche aufweist.

16. Vorrichtung nach einem der Ansprüche 1 bis 15, **dadurch gekennzeichnet, dass** die Prüfkopfanordnung (2) eine Anordnung zur Ultraschallprüfung mittels lokaler Tauchtechnik ist, wobei die Prüfkopfanordnung (2) bevorzugt mehrere Ultraschallmessköpfe aufweist.

17. Vorrichtung nach einem der Ansprüche 1 bis 16, **dadurch gekennzeichnet, dass** die Schallkopplungsfläche (3) durch eine Oberfläche einer plattenförmigen Abdeckung der Prüfkopfanordnung (2) gebildet ist.

18. Vorrichtung nach Anspruch 17, **dadurch gekennzeichnet, dass** die Abdeckung aus einem Material gebildet ist, dessen akustische Impedanz innerhalb einer Toleranz von +/-20% jener von Wasser entspricht.

19. Verfahren zur Steuerung einer kardanisch aufgehängten und in einer ersten Raumrichtung (z) verschiebbaren Prüfkopfanordnung zur Ultraschallmessung, wobei die Prüfkopfanordnung (2) in eine parallel zu einer Oberfläche eines zur prüfenden Gegenstandes verlaufenden Prüfrichtung (I) bewegt wird und entlang einer zu der Prüfrichtung (I) und der Oberfläche des zu prüfenden Gegenstandes verlaufenden, ersten Raumachse (z) verschiebbar angeordnet ist, wobei ein Schnittpunkt von Drehachsen einer kardanischen Aufhängung der Prüfkopfanordnung (2) in einem Tool Center Point einer die Prüfkopfanordnung (2) tragenden Roboteranordnung liegt, und, falls die Prüfkopfanordnung (2) in der ersten Raumrichtung (z) gegenüber der Roboteranordnung soweit verschoben wird, dass ein vorgegebener Schwellwert für eine zulässige Verschiebung überschritten wird, die Roboteranordnung in z-Richtung gleichsinnig mit der Verschiebung der Prüfkopfanordnung (2) um eine Strecke, deren Betrag der Verschiebung der Prüfkopfanordnung (2) entspricht, nachfährt, wobei die Prüfkopfanordnung (2) außerhalb einer Schallkopplungsfläche (3) angeordnete Laufrollen (4, 5, 6, 7, 8, 9) mit zueinander parallel und zur Prüfrichtung normal verlaufenden Drehachsen aufweist, und Laufflächen (13) der Laufrollen (4, 5, 6, 7, 8, 9) die Schallkopplungsfläche (3) in einer von der Prüfkopfanordnung (2) wegweisenden Richtung überragen, wobei zumindest zwei Laufrollen (6, 7) an einander gegenüberliegenden Seiten der Schallkopplungsfläche (3) angeordnet sind, deren jeweilige Drehachsen ortsfest in Bezug auf die Schallkopplungsfläche (3) angeordnet sind, wobei in Prüfrichtung (I) betrachtet vor den beiden Laufrollen (6, 7) mit den in Bezug auf die Schallkopplungsfläche (3) ortsfesten Drehachsen zumindest eine vordere Laufrolle (4, 5) angeordnet ist, wobei die Drehachse der zumindest einen vorderen Laufrolle (4, 5) in Bezug auf die Schallkopplungsfläche (3) abstandsveränderlich ist und die Vorrichtung zumindest einen Wegmessgeber (22) zur Erfassung einer Verschiebung der Prüfkopfanordnung (2) in der ersten Raumrichtung (z) aufweist.

## Claims

1. An ultrasonic testing device (1) comprising a test head arrangement (2) with a sound coupling surface (3), wherein the test head arrangement (2) is movable in a testing direction (I) extending parallel to a surface of an object to be tested, and the device comprises means for displacement along a first spatial axis (z) extending [perpendicular] to the testing direction (I) and the surface of the object to be tested, wherein the device comprises means for pivoting the testing head arrangement (2) about a second spatial axis (x) extending parallel to the testing direction (I) and about a third spatial axis (y) extending perpendicular to the first spatial axis (z) and the second spatial axis (x), **characterised in that** the test head arrangement (2) has rollers (4, 5, 6, 7, 8, 9), having rotational axes extending parallel to one another and perpendicular to the testing direction, which are arranged outside the sound coupling surface (3), and contact surfaces (13) of the rollers (4, 5, 6, 7, 8, 9) protrude over the sound coupling surface (3) in a direction facing away from the test head arrangement (2), wherein at least two rollers (6, 7) are arranged on opposing sides of the sound coupling surface (3), the respective rotational axes thereof being arranged fixedly relative to the sound coupling surface (3), wherein viewed in the testing direction (I) at least one front roller (4, 5) is arranged upstream of the two rollers (6, 7) having the fixed rotational axes relative to the sound coupling surface (3), wherein the rotational axis of the at least one front roller (4, 5) is able to be altered in terms of spacing relative to the sound coupling surface (3).

2. The device according to claim 1, **characterised in that** viewed in the testing direction (I) at least one rear roller (8, 9) is arranged downstream of the two rollers (6, 7) having the fixed rotational axes relative to the sound coupling surface (3), wherein the rotational axis of the at least one rear roller is able to be altered in terms of spacing relative to the sound coupling surface (3).

3. The device according to claim 1 or 2, **characterised in that** on opposing sides of the sound coupling surface (3) at least one respective front roller (4, 5) and rear roller (8, 9), having a rotational axis which is able to be altered in terms of space relative to the sound coupling surface (3), is arranged upstream and downstream of each roller (6, 7) having a fixed rotational axis relative to the sound coupling surface (3).

4. The device according to claim 3, **characterised in that** the front and rear roller of each side is mounted by one respective rocker arm (10, 11) which is rotatably mounted on the test head arrangement (2) about a rotational axis parallel to the third spatial direction (y), wherein the rocker arms (10, 11) of the front roller (4, 5) and the rear roller (8, 9) are coupled together at the ends remote from the respectively associated rollers (4, 5, 8, 9), wherein a movement of the front roller (4, 5) and the rear roller (8, 9) in the same direction is provided by means of the coupling.

5. The device according to claim 4, **characterised in that** the rocker arms (10, 11) are connected to at least one spring (12) which produces a force oriented away from the sound coupling surface (3) and acting in the direction of the rollers (4, 5, 8, 9).

6. The device according to claim 4 or 5, **characterised in that** the spacing between a contact surface (13) of the roller (5, 6, 8, 9) mounted on the rocker arm (10, 11) and the edge (14) of the rocker arm (10, 11) located closest to the contact surface (13) is a maximum of 10% of the diameter of the roller (4, 5, 8, 9) and/or is less than the projection of the rollers (6, 7) having the fixed rotational axes relative to the sound coupling surface (3).

7. The device according to one of claims 1 to 6, **characterised in that** the test head arrangement (2) comprises a frame (15), the rollers (4, 5, 6, 7, 8, 9) being mounted thereon, and said frame being mounted in a holder (16) which is pivotable about the second spatial axis (x) or about the third spatial axis (y), wherein the frame (15) is pivotably mounted on the holder (16) about the third spatial axis (y) when the holder (16) is pivotable about the second spatial axis (x), wherein the frame (15) is pivotable about the second spatial axis (x) when the holder (16) is pivotable about the third spatial axis (y), wherein an angle between the rotational axes of the rollers (4, 5, 6, 7, 8, 9) and the sound coupling surface (3) is invariable relative to a rotation of the frame (15).

8. The device according to claim 7, **characterised in that** the holder (16) is guided by means of at least one first slotted guide link (17), wherein a longitudinal central curve of the at least one slotted guide link (17) has the shape of a circular arc.

9. The device according to claim 8, **characterised in that** the frame (15) is guided on the holder (16) by means of at least one second slotted guide link (18), wherein a longitudinal central curve of the at least one second slotted guide link (18) has the shape of a circular arc.

10. The device according to claim 9, **characterised in that** a rotational axis of the frame (15) which is defined by the slotted guide link (18) extends through bearing points of the rollers (6, 7) having the fixed rotational axes relative to the sound coupling surface (3), and intersects the first spatial axis (z) preferably in a tool center point.

11. The device according to one of claims 8 to 10, **characterised in that** the holder (16) is resiliently mounted in the direction of the first spatial direction (z).

12. The device according to one of claims 1 to 11, **characterised in that** the test head arrangement (2) is mounted by a universal joint.

13. The device according to one of claims 1 to 12, **characterised in that** the test head arrangement (2) has at least one tensioning means (25) which is able to be tensioned, wherein the sound coupling surface (3) of the test head arrangement (2) is brought into a position aligned perpendicular to the first spatial direction (z) by tensioning the at least one tensioning means (25).

14. The device according to one of claims 1 to 13, **characterised in that** it comprises at least one displacement sensor (22) for detecting a displacement of the test head arrangement (2) in the first spatial direction (z).

15. The device according to one of claims 1 to 14, **characterised in that** the sound coupling surface (3) has a hydrophilic surface.

16. The device according to one of claims 1 to 15, **characterised in that** the test head arrangement (2) is an arrangement for ultrasonic testing by means of local immersion technology, wherein the test head arrangement (2) preferably has a plurality of ultrasonic measurement heads.

17. The device according to one of claims 1 to 16, **characterised in that** the sound coupling surface (3) is formed by a surface of a plate-shaped cover of the test head arrangement (2).

18. The device according to claim 17, **characterised in that** the cover is formed from a material, the acoustic impedance thereof corresponding to that of water within a tolerance of +/- 20%.

19. A method for controlling a test head arrangement for ultrasonic measurement which is suspended by a universal joint and is displaceable in a first spatial direction (z), wherein the test head arrangement (2) is moved in a testing direction (I) extending parallel to a surface of an object to be tested and is displaceably arranged along a first spatial axis (z) extending [perpendicular] to the testing direction (I) and the surface of the object to be tested, wherein a point of intersection of the rotational axes of the suspension of the test head arrangement (2) by a universal joint is located in a tool center point of a robot arrangement (2) bearing the test head arrangement (2), and if the test head arrangement (2) is displaced in the first spatial direction (z) relative to the robot arrangement to a sufficient extent that a predetermined threshold value for a permitted displacement is exceeded, the robot arrangement follows the displacement in the z-direction, in the same direction as the displacement of the test head arrangement (2), by a distance, the amount thereof corresponding to the displacement of the test head arrangement (2), wherein the test head arrangement (2) has rollers (4, 5, 6, 7, 8, 9), having rotational axes extending parallel to one another and perpendicular to the testing direction, which are arranged outside a sound coupling surface (3), and contact surfaces (13) of the rollers (4, 5, 6, 7, 8, 9) project over the sound coupling surface (3) in a direction facing away from the test head arrangement (2), wherein at least two rollers (6, 7) are arranged on opposing sides of the sound coupling surface (3), the respective rotational axes thereof being arranged fixedly relative to the sound coupling surface (3), wherein viewed in the testing direction (I), at least one front roller (4, 5) is arranged upstream of the two rollers (6, 7) having the fixed rotational axes relative to the sound coupling surface (3), wherein the rotational axis of the at least one front roller (4, 5) is able to be altered in terms of space relative to the sound coupling surface (3), and the device has at least one displacement sensor (22) for detecting a displacement of the test head arrangement (2) in the first spatial direction (z).

## Revendications

1. Dispositif (1) pour le contrôle par ultrasons avec une disposition à tête de contrôle (2) avec une surface de couplage de sons (3), la disposition à tête de contrôle (2) étant mobile dans une direction de contrôle (I) s'étendant parallèlement à une surface d'un objet à contrôler et le dispositif comprenant des moyens pour le coulissement le long d'un premier axe spatial (z) s'étendant dans la direction de contrôle (I) et vers la surface de l'objet à contrôler, le dispositif comprenant des moyens pour le pivotement de la disposition à tête de contrôle (2) autour d'un deuxième axe spatial (x) s'étendant parallèlement à la direction de contrôle (I) et autour d'un troisième axe spatial (y) s'étendant perpendiculairement au premier axe spatial (z) et au deuxième axe spatial (x), **caractérisé en ce que** la disposition à tête de contrôle (2) comprend des galets (4, 5, 6, 7, 8, 9) disposés à l'extérieur de la surface de couplage de sons (3), avec des axes de rotation s'étendant parallèlement entre eux et perpendiculairement à la direction de contrôle, et les surfaces de roulement (13) des galets (4, 5, 6, 7, 8, 9) dépassant de la surface de couplage de sons (3) dans une direction s'éloignant de la disposition à tête de contrôle (2), au moins deux galets (6, 7) étant disposés sur des côtés opposés entre eux de la surface de couplage de sons (3), moyennant quoi, vu dans la direction de contrôle (I), avant les deux galets (6, 7), avec les axes de rotation fixes par rapport à la surface de couplage de sons (3), est disposé au moins un galet avant (4, 5), l'axe de rotation de l'au moins galet avant (4, 5) présentant une distance variable par rapport à la surface de couplage de sons (3).

2. Dispositif selon la revendication 1, **caractérisé en ce que**, vu dans la direction de contrôle (I), derrière les deux galets (6, 7), avec les axes de rotation fixes par rapport à la surface de couplage de sons (3), est disposé au moins un galet arrière (8, 9), l'axe de rotation de l'au moins un galet arrière présentant une distance variable par rapport à la surface de couplage de sons (3).

3. Dispositif selon la revendication 1 ou 2, **caractérisé en ce que**, sur des côtés opposés entre eux de la surface de couplage de sons (3), devant et derrière chaque galet (6, 7), avec un axe de rotation fixe par rapport à la surface de couplage de sons (3), est disposé au moins un galet avant (4, 5) et un galet arrière (8, 9), avec un axe de rotation présentant une distance variable par rapport à la surface de couplage de sons (3).

4. Dispositif selon la revendication 3, **caractérisé en ce que** le galet avant et le galet arrière sont logés de chaque côté avec chacun un bras oscillant (10, 11) logé de manière rotative au niveau de la disposition à tête de contrôle (2) autour d'un axe de rotation parallèle à la troisième direction spatiale (y), les bras oscillants (10, 11) du galet avant (4, 5) et du galet arrière (8, 9) étant couplés aux extrémités opposées aux galets correspondants (4, 5, 8, 9), ce couplage permettant un mouvement dans le même sens du galet avant (4, 5) et du galet arrière (8, 9).

5. Dispositif selon la revendication 4, **caractérisé en ce que** les bras oscillants (10, 11) sont reliés avec au moins un ressort (12), qui génère une force qui s'éloigne de la surface de couplage de sons (3) et qui agit en direction des galets (4, 5, 8, 9).

6. Dispositif selon la revendication 4 ou 5, **caractérisé en ce que** la distance entre une surface de roulement (13) du galet (5, 6, 8, 9) logé au niveau du bras oscillant (10, 11) et l'arête (14) du bras oscillant (10, 11) la plus proche de la surface de roulement (13) représente au maximum 10 % du diamètre du galet (4, 5, 8, 9) et/ou est inférieure au porte-à-faux des galets (6, 7) avec les axes de rotation fixes par rapport à la surface de couplage de sons (3).

7. Dispositif selon l'une des revendications 1 à 6, **caractérisé en ce que** la disposition à tête de contrôle (2) comprend un châssis (15) sur lequel les galets (4, 5, 6, 7, 8, 9) sont logés et qui est logé dans un support (16) pivotant autour du deuxième axe spatial (x) ou autour du troisième axe spatial (y), le châssis (15) étant logé sur le support (16) de manière pivotante autour du troisième axe spatial (y) lorsque le support (16) est pivotant autour du deuxième axe spatial (x), le châssis (15) étant pivotant autour du deuxième axe spatial (x) lorsque le support (16) est pivotant autour du troisième axe spatial (y), un angle entre les axes de rotation des galets (4, 5, 6, 7, 8, 9) et la surface de couplage de sons (3) étant invariable par rapport à une rotation du châssis (15).

8. Dispositif selon la revendication 7, **caractérisé en ce que** le support (16) est guidé au moyen d'au moins une première coulisse (17), une courbe longitudinale moyenne de l'au moins une première coulisse (17) présentant la forme d'un arc de cercle.

9. Dispositif selon la revendication 8, **caractérisé en ce que** le châssis (15) est guidé au niveau du support (16) au moyen d'au moins une deuxième coulisse (18), une courbe longitudinale moyenne de l'au moins une deuxième coulisse (18) présentant la forme d'un arc de cercle.

10. Dispositif selon la revendication 9, **caractérisé en ce qu'**un axe de rotation du châssis (15), défini par la coulisse (18), s'étend à travers les points d'appui des galets (6, 7) avec les axes de rotation fixés par rapport à la surface de couplage de sons (3), et le premier axe spatial (z) se coupant de préférence au niveau d'un « Tool Center Point ».

11. Dispositif selon l'une des revendications 8 à 10, **caractérisé en ce que** le support (16) est logé de manière élastique en direction de la première direction spatiale (z).

12. Dispositif selon l'une des revendications 1 à 11, **caractérisé en ce que** la disposition à tête de contrôle (2) est logée par l'intermédiaire de cardans.

13. Dispositif selon l'une des revendications 1 à 12, **caractérisé en ce que** la disposition à tête de contrôle (2) comprend au moins un moyen de traction serrable (25), la surface de couplage de sons (3) de la disposition à tête de contrôle (2) étant amenée dans une position orientée perpendiculairement à la première direction spatiale (z) par serrage de l'au moins un moyen de traction (25).

14. Dispositif selon l'une des revendications 1 à 13, **caractérisé en ce qu'**il comprend au moins un capteur de déplacement (22) pour la mesure d'un déplacement de la disposition à tête de contrôle (2) dans la première direction spatiale (z).

15. Dispositif selon l'une des revendications 1 à 14, **caractérisé en ce que** la surface de couplage de sons (3) comprend une surface hydrophile.

16. Dispositif selon l'une des revendications 1 à 15, **caractérisé en ce que** la disposition à tête de contrôle (2) est une disposition pour le contrôle par ultrasons au moyen d'une technique d'immersion, la disposition à tête de contrôle (2) comprenant de préférence plusieurs têtes de mesure par ultrasons.

17. Dispositif selon l'une des revendications 1 à 16, **caractérisé en ce que** la surface de couplage de sons (3) est constituée d'une surface d'un couvercle en forme de plaque de la disposition à tête de contrôle (2).

18. Dispositif selon l'une des revendications 1 à 17, **caractérisé en ce que** le couvercle est constitué d'un matériau dont l'impédance acoustique correspond à celle de l'eau avec une tolérance de ± 20 %.

19. Procédé de commande d'une disposition à tête de contrôle suspendues par cardans et mobile dans une première direction spatiale (z), la disposition à tête de contrôle (2) étant déplacée dans une direction de contrôle (I) parallèle à une surface d'un objet à contrôler et étant disposée de manière mobile le long d'un premier axe spatial (z) s'étendant dans la direction de contrôle (I) et vers la surface de l'objet à contrôler, un point d'intersection des axes de rotation d'une suspension par cardans de la disposition à tête de contrôle (2) se trouvant au niveau d'un « Tool Center Point » d'une disposition robotique supportant la disposition à tête de contrôle (2) et, si la disposition à tête de contrôle (2) est déplacée dans la première direction spatiale (z) par rapport à la disposition robotique de façon à ce qu'une valeur seuil prédéterminée pour un déplacement admissible soit dépassée, la disposition robotique se déplace, dans la direction z, dans le même sens que le déplacement de la disposition à tête de contrôle (2), d'une distance correspondant au déplacement de la disposition à tête de contrôle (2), la disposition à tête de contrôle (2) comprenant des galets (4, 5, 6, 7, 8, 9) disposés à l'extérieur d'une surface de couplage de sons (3), avec des axes de rotation parallèles entre eux et perpendiculaires à la direction de contrôle, et les surfaces de roulement (13) des galets (4, 5, 6, 7, 8, 9) dépassent de la surface de couplage de sons (3) dans une direction s'éloignant de la disposition à tête de contrôle (2), au moins deux galets (6, 7) étant disposés sur des côtés opposés entre eux de la surface de couplage de sons (3), leurs axes de rotation respectifs étant disposés de manière fixes par rapport à la surface de couplage de sons (3), moyennant quoi, vu dans la direction de contrôle (I), avant les deux galets (6, 7), avec les axes de rotation fixes par rapport à la surface de couplage de sons (3), est disposé au moins un galet avant (4, 5), l'axe de rotation de l'au moins un galet avant (4, 5) présentant une distance variable par rapport à la surface de couplage de sons (3) et le dispositif comprenant au moins un capteur de déplacement (22) pour la mesure d'un déplacement de la disposition à tête de contrôle (2) dans la première direction spatiale (z).
